# EUROPEAN PATENT APPLICATION

(11) **EP 3 713 342 A1**
(43) Date of publication of application: **23.09.2020**
(21) Application number: 18878000.1
(22) Date of filing: 16.11.2018
(51) Int. Cl.: H04W 72/04

(54) **BANDWIDTH CONFIGURATION METHOD AND ELECTRONIC DEVICE**

(30) Priority: 16.11.2017 CN 201711143295
(71) Applicant: Sharp Kabushiki Kaisha, Sakai City, Osaka 590-8522 (JP); FG Innovation Company Limited, Tuen Mun, New Territories, Hong Kong (CN)
(72) Inventor: ZHANG, Chongming, Shanghai 201206 (CN); YAMADA, Shohei, Sakai City Osaka 590-8522 (JP); LIU, Renmao, Shanghai 201206 (CN)
(74) Representative: Müller-Boré & Partner Patentanwälte PartG mbB
(86) International application number: PCT/CN2018/115933
(87) International publication number: WO 2019/096256

(57) **Abstract**

The present disclosure provides a bandwidth configuration method, including: determining whether an activated bandwidth part exists in response to determining that an activated bandwidth part needs to be applied; and if no activated bandwidth part exists, then applying a default bandwidth part configuration. The method according to the present disclosure perfects bandwidth configurations of user equipment in different situations. The present disclosure further provides an electronic device for executing the bandwidth configuration method.

## Description

### Technical Field

The present disclosure relates to the field of wireless communication technology, and in particular, to a bandwidth configuration method and an electronic device for executing the method.

### Background

With the rapid growth of mobile communication and great progress of technology, the world will move toward a fully interconnected network society where anyone or anything can acquire information and share data anytime and anywhere. It is estimated that there will be 50 billion interconnected devices by 2020, of which only about 10 billion may be mobile phones and tablet computers. The rest are not machines communicating with human beings but machines communicating with one another. Therefore, how to design a system to better support the Internet of Everything is a subject needing further and intensive study.

For this purpose, in the 3rd Generation Partnership Project (3GPP) RAN#64 plenary meeting held in March 2016, a study subject on new 5G radio access technology was proposed (see non-patent literature: **RP-160671** New SID Proposal: Study on New Radio Access Technology). In the description of the work project, the operating frequency band of the new communication system in the future can be expanded to 100 GHz, and can at least meet the enhanced mobile broadband service demand, the communication demand of massive Internet of Things terminals, the high-reliability service demand and the like. The study work of the project will be completed in 2018.

In the future access technology, because the system can operate in high frequency bands, the operation bandwidth of the system can reach greater than 400 MHz; and the operation bandwidth that can be supported by user equipment (UE) itself is far lower than the operation bandwidth of the system, so that the concept of Bandwidths Part (BWP) is introduced. So-called BWP is to divide the operation bandwidth of the system into a plurality of bandwidth parts. Network nodes (for example, base stations) can configure one or a plurality of BWPs for the UE according to the bandwidth capacity supported by the UE. When data needs to be transmitted, the UE can operate on a plurality of BWPs at the same time, which greatly improves the transmission rate; when the UE has no data to be transmitted, only one of the BWPs needs be detected, and waits for scheduling of the base station, so as to reduce energy consumption. A BWP configuration may be common or dedicated to UE. When UE is in an idle state, the UE can receive a common BWP configuration in system information and apply the same to enter a connected state; when the UE enters the connected state, the UE can receive a dedicated BWP configuration of a base station and operate on one or a plurality of activated BWPs of configured BWPs.

The common BWP configuration can provide the UE with configuration information of initial access. That is, when the UE has not received any dedicated BWP configuration, the common BWP configuration can be applied. Once an effective BWP configuration is received in dedicated signaling, the UE will no longer apply the common BWP configuration, but operate according to a dedicated BWP configuration; and the UE operates only on activated BWPs of these configured BWPs. In the BWP configurations received by the UE, one default BWP is always activated or at least one default BWP is activated. The base station can instruct the UE to switch to other BWPs to operate, and then the BWP switched to will become a new activated BWP.

However, under some circumstances, the UE may have a dedicated BWP configuration, but may not have an activated BWP. No provision stipulates how the UE operates when signal transmission is required in a situation in which a dedicated BWP configuration exists but no activated BWP currently exists.

### Summary

In one aspect, the present disclosure provides a bandwidth configuration method, comprising: determining whether an activated bandwidth part exists in response to determining that an activated bandwidth part needs to be applied; and if no activated bandwidth part exists, then applying a default bandwidth part configuration.

According to an embodiment of the present disclosure, the default bandwidth part configuration is comprised in a default physical layer/physical channel configuration.

According to an embodiment of the present disclosure, the default bandwidth part configuration comprises releasing a dedicated bandwidth part configuration.

According to an embodiment of the present disclosure, the applying a default bandwidth part configuration comprises: releasing the dedicated bandwidth part configuration; and performing signal transmission by applying a common bandwidth part configuration.

According to an embodiment of the present disclosure, it is determined that an activated bandwidth part needs to be applied in any one of the following situations: triggering of an RRC connection re-establishment process; triggering of an RRC connection establishment process for switching from an inactive state to an active state; or triggering of an RRC connection establishment process.

According to an embodiment of the present disclosure, the bandwidth configuration method further comprises: determining whether a current serving cell has been changed; and when it is determined that the current serving cell has not been changed, determining whether an access resource exists on a previously activated bandwidth part.

According to an embodiment of the present disclosure, the bandwidth configuration method further comprises: when an access resource exists on the previously activated bandwidth part, applying the previously activated bandwidth part as a currently activated bandwidth part.

According to an embodiment of the present disclosure, the bandwidth configuration method further comprises: when no access resource exists on the previously activated bandwidth part, applying the default bandwidth part configuration.

In another aspect, the present disclosure provides an electronic device, comprising one or a plurality of processors, and a memory storing a computer program, wherein when executed on the one or the plurality of processors, the computer program causes the one or the plurality of processors to execute the method according to one aspect of the present disclosure.

In another aspect, the present disclosure provides an electronic device, comprising: a bandwidth determination module configured to determine whether an activated bandwidth part exists in response to determining that an activated bandwidth part needs to be applied; and a bandwidth configuration module configured to apply a default bandwidth part configuration when the bandwidth determination module determines that no activated bandwidth part exists.

In another aspect, the present disclosure provides a non-volatile storage medium storing computer-executable instructions, wherein when executed, the instructions are applied to implement the method as described above.

In another aspect, the present disclosure provides a computer program comprising computer-executable instructions, wherein when executed, the instructions are applied to implement the method as described above.

### Brief Description of the Drawings

In order to make the present disclosure and its advantages be more completely understood, description will be made below with reference to the accompanying drawings, in which:
FIG. 1 schematically illustrates a flowchart of a bandwidth configuration method according to an embodiment of the present disclosure;
FIG. 2 schematically illustrates a block diagram of an electronic device according to an embodiment of the present disclosure; and
FIG. 3 schematically illustrates a block diagram of an electronic device according to another embodiment of the present disclosure.

### Detailed Description

The embodiments of the present disclosure will be described below with reference to the accompanying drawings. However, it should be understood that the descriptions are merely exemplary rather than limiting the scope of the present disclosure. Besides, in the following description, the description of the commonly-known structure and technique is omitted, so as to avoid unnecessarily obscuring the concept of the present disclosure.

The terms used herein are only intended to describe specific embodiments rather than limiting the present disclosure. The words "a," "one (type)" and "the" or the like used herein should also include the meanings of "a plurality of" and "various," unless otherwise clearly specified in the context. In addition, the terms "comprising," "including" or the like used herein indicate the existence of the stated features, steps, operations and/or components, but do not exclude the existence or addition of one or a plurality of other features, steps, operations or components.

All terms used herein (including technical and scientific terms) have the meanings generally understood by one skilled in the art, unless otherwise defined. It should be noted that the terms used herein should be interpreted to have meanings consistent with the context of the present description, and should not be interpreted in an idealized or too stereotypical way.

The drawings illustrate some block diagrams and/or flowcharts. It should be understood that some of the blocks in the block diagrams and/or flowcharts or combinations thereof may be implemented by computer program instructions. These computer program instructions can be provided to a processor of a general-purpose computer, a special-purpose computer, or other programmable data processing apparatuses, so that these instructions, when executed by the processor, can create apparatuses for implementing the functions/operations described in these block diagrams and/or flowcharts.

Therefore, the technology of the present disclosure may be implemented in the form of hardware and/or software (including firmware, microcode, etc.). In addition, the technology of the present disclosure may be applied in the form of a computer program product on a computer-readable medium storing instructions; the computer program product can be applied by an instruction execution system or applied in combination with an instruction execution system. In the context of the present disclosure, the computer-readable medium may be any medium capable of containing, storing, conveying, propagating, or transmitting instructions. For example, the computer-readable medium may include, but not limited to, electrical, magnetic, optical, electromagnetic, infrared or semiconductor systems, apparatuses, devices, or propagation media. Specific examples of the computer-readable medium include: magnetic storage apparatuses, such as magnetic tapes or Hard Disk Drives (HDDs); optical storage apparatuses, such as Compact Disc Read-only Memories (CD-ROMs); memories, such as Random Access Memories (RAMs) or flash memories; and/or wired/wireless communication links.

A plurality of embodiments according to the present invention are specifically described below by using an LTE mobile communications system and its subsequent evolved version as an exemplary application environment. However, it should be noted that the present invention is not limited to the following embodiments, but is applicable to more other wireless communications systems, such as a future 5G cellular communications system, and is applicable to other base stations and terminal devices, such as base stations and terminal devices supporting eMTC, MMTC, and so on.

Prior to the specific description, a plurality of terms mentioned in the present invention are illustrated as follows. The terms involved in the present invention shall have the meanings set forth below, unless otherwise indicated. In addition, a "default" (BWP) configuration described herein may be "default" or "have a default value," may be a (BWP) configuration agreed by a UE side and a network or base station side, may be pointed out directly in signaling, or may be a configuration agreed in advance, and does not need to be carried in specific signaling.
UE: User Equipment/terminal device
MAC: Medium Access Control
RRC: Radio Resource Control
PRACH: Physical Random Access Channel

An embodiment of the present disclosure provides a bandwidth configuration method. This method is related to user equipment (UE) which requires signal transmission in a situation in which a dedicated bandwidth part (BWP) configuration exists but no activated bandwidth part currently exists.

A common BWP configuration can provide the UE with configuration information of initial access. That is, when the UE has not received any dedicated BWP configuration, the common configuration can be applied. Once an effective BWP configuration is received in dedicated signaling, the UE will no longer apply the common BWP configuration, but operate according to the dedicated BWP configuration, and the UE operates only on activated BWPs of these configured BWPs. In the BWP configuration received by the UE, one default BWP is always activated or at least one default BWP is activated. The base station can instruct the UE to switch to other BWPs to operate, and then the BWP switched to will become a new activated BWP. However, in some situations, the UE may have a dedicated BWP configuration, but may not have an activated BWP. For example:

### Situation 1: RRC connection re-establishment

During transmission of the UE, due to signal interference or other reasons, a problem occurs in the link, triggering an RRC connection re-establishment process. Before the re-establishment, the UE has received an effective BWP configuration, but a link problem may occur on the activated BWP, so that the activated BWP cannot continue operating. In this situation, the UE can consider that the activated BWP is ineffective or deactivated, and can further consider that the default BWP is also deactivated.

### Situation 2: switching of UE from an inactive state to a connected state

In the future access technology, the states of the UE may be divided into an idle state, a connected state, and an intermediate state according to a connection status of the UE at the air interface. In the intermediate state, although the UE has no connection at the air interface, the access stratum context (AS context) of the UE is stored on the base station side and UE side, and the UE is assigned with a resume ID. The ID is an identity applied by the UE to resume an RRC connection. This intermediate state may be considered as a suspended state, or may be considered as an inactive state.

Before the UE in the connected state enters the inactive state, the UE has received a dedicated BWP configuration from the base station and operates on activated BWPs therein. However, after the UE enters the inactive state, no activated BWP exists due to that no connection exists at the air interface, but the UE still stores the dedicated BWP configuration.

In the situations described above, the UE needs to initiate an access request to the base station in order to re-establish the RRC connection or resume the RRC connection, so that how the UE determines a BWP to which the UE initiates the access is a problem needing to be solved. If the dedicated BWP configuration is continuously adopted, then the UE can continue operating on the activated BWP only if the UE first determines which configured BWP(s) is activated. However, because the air interface connection of the UE is in a disconnected state, that is, no activated BWP can operate, in this situation, the UE needs to know how to deal with a situation in which a configured BWP exists but no activated BWP exists. In addition, once the UE determines that a certain BWP is an activated BWP, the UE needs to initiate an uplink access request in order to resume the connection, but the activated BWP determined by the UE may or may not contain an uplink access resource. In this situation, how the UE continues to select a BWP is also a problem needing to be solved.

According to an embodiment of the present disclosure, the user equipment is configured to apply a default bandwidth part configuration in a situation in which no activated bandwidth part exists (but a dedicated bandwidth part configuration exists), thus perfecting the bandwidth configuration of the user equipment. The default bandwidth part configuration may be configured in advance according to the system configuration, operator requirements, etc. According to one embodiment of the present disclosure, the default bandwidth part configuration may be configured to release the dedicated bandwidth part configuration, and then perform signal transmission by applying a common bandwidth part configuration. Certainly, according to the embodiment of the present disclosure, the default bandwidth part configuration is not limited to such configuration.

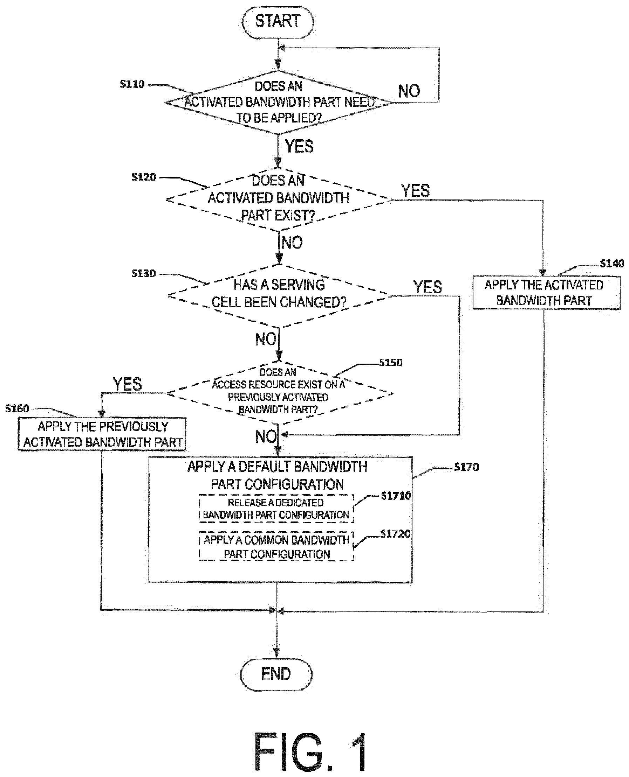

FIG. 1 schematically illustrates a flowchart of a bandwidth configuration method 100 according to an embodiment of the present disclosure.

As illustrated in FIG. 1, the method starts from an operation S110 of determining that an activated bandwidth part needs to be applied. The bandwidth configuration method according to the embodiment of the present disclosure starts from the user equipment needing to perform signal transmission, that is, applying the activated bandwidth part. If it is determined that the activated bandwidth part needs to be applied, then the method proceeds to an operation S120 of determining whether an activated bandwidth part exists. If no activated bandwidth part exists, then the method proceeds to an operation S170 of operating by applying a default bandwidth part configuration. If an activated bandwidth part exists, then the method proceeds to an operation S140 of operating by applying the activated bandwidth part.

FIG. 1 also illustrates that, according to the embodiment of the present disclosure, the operation S170 may further include an operation S 1710 of releasing a dedicated bandwidth part configuration, and an operation S1720 of performing signal transmission by applying a common bandwidth part configuration. The common bandwidth part configuration may include configuration information such as an uplink bandwidth part and a downlink bandwidth part that can be adopted by the user equipment.

According to another embodiment of the present disclosure, the bandwidth configuration method 100 may also include an operation S130 of determining whether a current serving cell has been changed. If the current serving cell has been changed, then the method proceeds to the operation S170 of operating by applying the default bandwidth part configuration. If it is determined in the operation S130 that the current serving cell has not been changed, then the method proceeds to an operation S150 of determining whether an access resource, for example, a PRACH resource, exists on a previously activated bandwidth part. If it is determined that an available access resource exists on the previously activated bandwidth part, then the method proceeds to an operation S160 of operating by applying the previously activated bandwidth part, for example, performing signal (e.g., control signaling or a re-access request) transmission on the bandwidth part. If no available access resource exists on the previously activated bandwidth part, then the method proceeds to the operation S170 of operating by applying the default bandwidth part configuration.

According to an embodiment of the present disclosure, the default bandwidth part configuration is included in a default physical layer/physical channel configuration. When the user equipment determines that no available activated bandwidth part exists, the user equipment applies the default physical layer/physical channel configuration. In this way, the default bandwidth part configuration is applied.

According to an embodiment of the present disclosure, it is determined that an activated bandwidth part needs to be applied in any one of the following situations: triggering of an RRC connection re-establishment process; triggering of an RRC connection establishment process for switching from an inactive state to an active state; and triggering of an RRC connection establishment process.

The bandwidth configuration method according to the embodiment of the present disclosure will be described below in combination with specific examples.

### Example 1

When RRC connection re-establishment is triggered or initiated, UE always applies a default BWP configuration in an initialization process of the RRC connection re-establishment. Specifically, the default BWP configuration may be defined to have a value of release. A configuration having a value of release may be understood as an instruction. That is, after the UE determines to apply such configuration, an action to be executed is to release an existing BWP configuration. Further, it could be to release the dedicated BWP configuration. It can also be understood that after the UE determines to apply such configuration, the UE can enter a BWP-free configuration state. Further, the state may be a dedicated BWP-free configuration state. After the UE determines to apply a default configuration in which a BWP configuration has a value of release, once the UE subsequently needs to apply the BWP configuration to perform some actions, the UE always applies a common BWP configuration, or applies the BWP configuration obtained from system information.

Further, the BWP configuration may be divided into an uplink BWP configuration and a downlink BWP configuration. A default uplink BWP configuration and a default downlink BWP configuration both have a value of release.

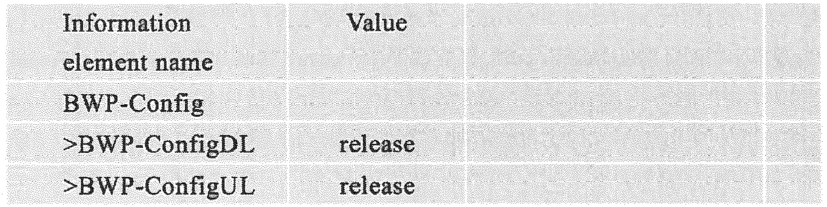

Another implementation mode of this example is as follows:

One default physical layer/physical channel configuration is configured in advance. A default BWP configuration is included in the default physical layer/physical channel configuration and has a value of release. Further, a default uplink BWP configuration and a default downlink BWP configuration can be distinguished as follows:

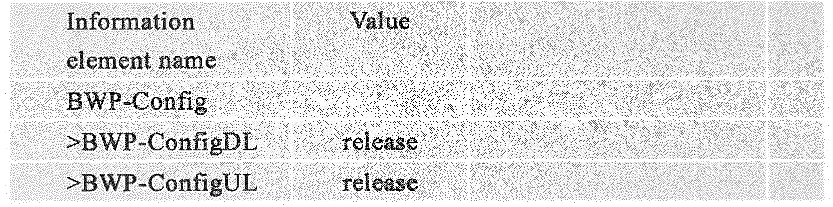

When RRC connection re-establishment is triggered or initiated, UE always applies a default physical layer/physical channel in an initialization process of the RRC connection re-establishment.

### Example 2

Example 2 differs from example 1 in that UE is currently in an inactive state, so that when the UE in the inactive state needs to request resumption of an RRC connection, the bandwidth configuration method according to the embodiment of the present disclosure is adopted.

Specifically, before the UE transmits an RRC connection resume request message or when the UE is in the inactive state, the UE may adopt a default BWP configuration during initialization of an RRC connection establishment process triggered in order to resume an RRC connection. Specifically, the default BWP configuration may be defined to have a value of release.

Further, the default BWP configuration may be divided into a default uplink BWP configuration and a default downlink BWP configuration. The default uplink BWP configuration and the default downlink BWP configuration both have a value of release.

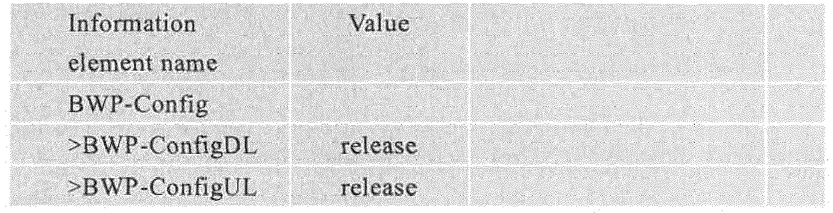

Another implementation mode of this example is as follows:

One default physical layer/physical channel configuration is configured in advance. A default BWP configuration is included in the default physical layer/physical channel configuration and has a value of release. Further, a default uplink BWP configuration and a default downlink BWP configuration can be distinguished as follows:

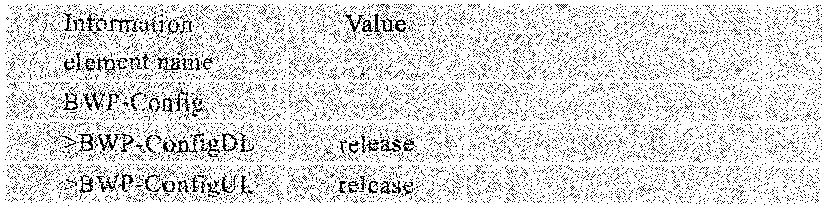

When UE is in an inactive state, a default physical layer/physical channel is applied during initialization of an RRC connection establishment process triggered in order to resume an RRC connection.

### Example 3

Example 3 differs from example 1 in that UE can also adopt the bandwidth configuration method according to the embodiment of the present disclosure in the RRC connection establishment process.

In a situation in which the UE re-selects a cell, because an RRC connection needs to be established in the new cell, in order to prevent the BWP configuration received by the UE during connection in the previous cell from affecting the establishment of an RRC connection in the new cell by UE, it can be specified that when the UE is in an idle state, a default BWP configuration is applied during initialization of an RRC connection establishment process triggered in order to establish an RRC connection. Specifically, the default BWP configuration may be defined to have a value of release.

Further, the BWP configuration may be divided into an uplink BWP configuration and a downlink BWP configuration. A default uplink BWP configuration and a default downlink BWP configuration both have a value of release.

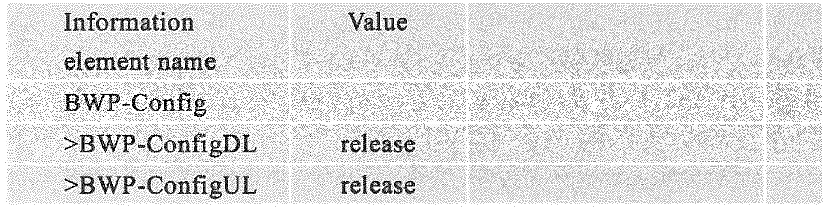

Another implementation mode of this example is as follows:

One default physical layer/physical channel configuration is configured in advance. A default BWP configuration is included in the default physical layer/physical channel configuration and has a value of release. Further, a default uplink BWP configuration and a default downlink BWP configuration can be distinguished as follows:

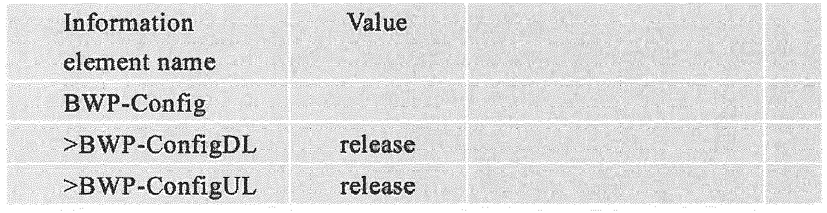

When UE is in the idle state, a default physical layer/physical channel is applied during initialization of an RRC connection establishment process triggered in order to establish an RRC connection.

### Example 4

Unlike the previous three examples in which a default BWP configuration is adopted, in this example, the UE can operate according to the BWP configured previously.

When RRC connection re-establishment is triggered or initiated, the UE determines, in an initialization process of RRC connection re-establishment, whether a current serving cell has been changed, that is, determines whether a cell in which the RRC connection re-establishment is to be performed is the same as the serving cell before the RRC connection re-establishment is performed. For example, whether the serving cell has been changed may be determined according to a cell ID.

If the current serving cell has not been changed, then whether an access resource (for example, a PRACH resource) exists on an activated BWP before the re-establishment process is initialized is determined. In particular, if the UE operates on a default BWP before the re-establishment process is initialized, then the BWP is considered to be an activated BWP:
If so, then an access request is initiated on the BWP.
If not, then the bandwidth configuration method according to the embodiment of the present disclosure is executed.

If the current serving cell has been changed, then the bandwidth configuration method according to the embodiment of the present disclosure is executed.

The above-described process may also take place in the situations described in example 2. That is, before the UE transmits an RRC connection resume request message or when the UE is in the inactive state, the UE may adopt a default BWP configuration during initialization of an RRC connection establishment process triggered in order to resume an RRC connection. In this process, whether the current serving cell has been changed is determined. That is, whether a cell in which the RRC connection re-establishment is to be performed is the same as the serving cell before the RRC connection re-establishment is performed is determined. For example, whether the serving cell has been changed may be determined according to a cell ID.

If the current serving cell has not been changed, then whether an access resource (for example, a PRACH resource) exists on an activated BWP before an RRC connection resume request is transmitted or before an RRC connection establishment process triggered in order to resume an RRC connection is determined. In particular, if UE operates on a default BWP before the RRC connection resume request is transmitted or a connection establishment process is initiated, then the BWP is considered as an activated BWP:
If so, then an access request is initiated on the BWP.
If not, then the bandwidth configuration method according to the embodiment of the present disclosure is executed.

If the current serving cell has been changed, then the bandwidth configuration method according to the embodiment of the present disclosure is executed.

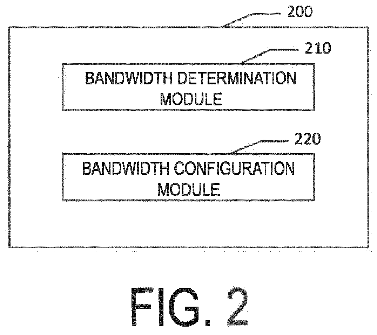

FIG. 2 schematically illustrates a block diagram of an electronic device 200 according to an embodiment of the present disclosure.

As illustrated in FIG. 2, the electronic device 200 includes a bandwidth determination module 210 and a bandwidth configuration module 220. The electronic device 200 can execute the method described above with reference to FIG. 1 and in combination with examples 1 to 4, so as to configure bandwidth parts.

Specifically, the bandwidth determination module 210 is configured to determine whether an activated bandwidth part exists in response to determining that an activated bandwidth part needs to be applied. The bandwidth configuration module 220 is configured to apply a default bandwidth part configuration when the bandwidth determination module 210 determines that no activated bandwidth part exists.

According to an embodiment of the present disclosure, the bandwidth determination module 210 is configured to be initiated when it is determined that an activated bandwidth part needs to be applied, so as to determine whether an activated bandwidth part exists.

According to one embodiment of the present disclosure, it is determined that an activated bandwidth part needs to be applied in any one of the following situations: triggering of an RRC connection re-establishment process; triggering of an RRC connection establishment process for switching from an inactive state to an active state; or triggering of an RRC connection establishment process.

According to an embodiment of the present disclosure, the bandwidth configuration module 220 may be configured to release a dedicated bandwidth part configuration; and perform signal transmission by applying a common bandwidth part configuration.

According to an embodiment of the present disclosure, the bandwidth configuration module 220 may also be configured to: determine whether a current serving cell has been changed; when it is determined that the current serving cell has not been changed, determine whether an access resource exists on a previously activated bandwidth part; when an access resource exists on the previously activated bandwidth part, apply the previously activated bandwidth part as a currently activated bandwidth part; and when no access resource exists on the previously activated bandwidth part, apply the default bandwidth part configuration.

It can be understood that the bandwidth determination module 210 and the bandwidth configuration module 220 may be combined to be implemented in one module, or any one of the modules may be divided into a plurality of modules. Alternatively, at least part of functions of one or a plurality of modules in these modules and at least part of functions of other modules may be combined, and implemented in one module. According to an embodiment of the present disclosure, at least one of the bandwidth determination module 210 and the bandwidth configuration module 220 may be at least partially implemented as a hardware circuit, such as a Field Programmable Gate Array (FPGA), a Programmable Logic Array (PLA), a system on chip, a system on substrate, a system on package and an Application Specific Integrated Circuit (ASIC), or may be implemented by any other reasonable means such as hardware or firmware that can integrate or package a circuit, or may be implemented via any appropriate combination of software, hardware and firmware. Alternatively, at least one of the bandwidth determination module 210 and the bandwidth configuration module 220 may be at least partially implemented as a computer program module, and when run by a computer, the program may execute the functions of the corresponding modules.

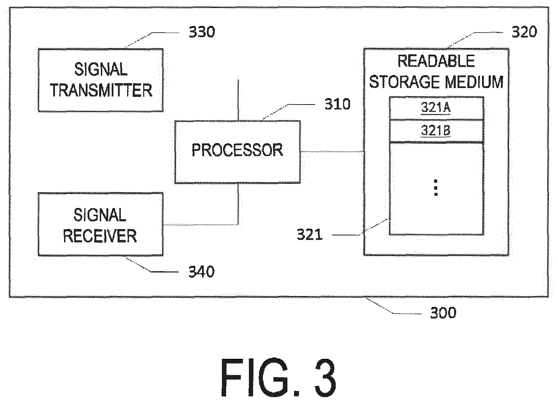

FIG. 3 schematically illustrates a block diagram of an electronic device 300 according to another embodiment of the present disclosure.

As illustrated in FIG. 3, an electronic device 300 includes a processor 310, a computer-readable storage medium 320, a signal transmitter 330, and a signal receiver 340. The electronic device 300 can execute the method described above with reference to FIG. 1 and in combination with examples 1 to 4, so as to configure bandwidth parts.

Specifically, the processor 310 may include, for example, a general-purpose microprocessor, an instruction set processor and/or a related chip set and/or a special-purpose microprocessor (for example, an Application Specific Integrated Circuit (ASIC)). The processor 310 may further include an on-board memory for a caching purpose. The processor 310 may be a single processing unit or a plurality of processing units for executing different actions of the method process according to the embodiment of the present disclosure described with reference to FIG. 1 and in combination with examples 1 to 4.

The computer-readable storage medium 320 may be, for example, any medium capable of containing, storing, conveying, propagating or transmitting instructions. For example, the readable storage medium may include, but not limited to, electrical, magnetic, optical, electromagnetic, infrared or semiconductor systems, apparatuses, devices, or propagation media. Specific examples of the readable storage medium include: magnetic storage apparatuses, such as magnetic tapes or Hard Disk Drives (HDDs); optical storage apparatuses, such as Compact Disc Read-only Memories (CD-ROMs); memories, such as Random Access Memories (RAMs) or flash memories; and/or wired/wireless communication links.

The computer-readable storage medium 320 may include a computer program 321. The computer program 321 may include code/computer-executable instructions. When executed by the processor 310, the code/computer-executable instructions cause the processor 310 to execute, for example, the method process described above with reference to FIG. 1 and in combination with examples 1 to 4, and any variations thereof.

The computer program 321 may be configured to have, for example, computer program code including a computer program module. For example, in an exemplary embodiment, the code in the computer program 321 may include one or a plurality of program modules, for example, a module 321A, a module 321B.... For example, when the module 321A is executed, the electronic device is caused to determine whether an activated bandwidth part exists. If it is determined that no activated bandwidth part exists, then the module 321B is executed, and the electronic device is caused to apply a default bandwidth part configuration.

It should be noted that the division mode and the number of modules are not fixed. One skilled in the art may use appropriate program modules or program module combinations according to the actual situation. When these program module combinations are executed by the processor 310, the processor 310 is enabled to execute the method process described with reference to FIG. 1 and in combination with examples 1 to 4, and any variations thereof.

According to an embodiment of the present disclosure, the processor 310 may interact with the signal transmitter 330 and the signal receiver 340, so as to execute, for example, the method process described with reference to FIG. 1 and in combination with examples 1 to 4, and any variations thereof. For example, when the module 321B determines to perform an operation by applying the default bandwidth part configuration, the electronic device may release the dedicated bandwidth part configuration and apply the common bandwidth part configuration, for example, perform signal transmission on the uplink and the downlink via the signal transmitter 330 and the signal receiver 340 by applying the common bandwidth part.

According to an embodiment of the present disclosure, at least one of the bandwidth determination module 210 and the bandwidth configuration module 220 may be implemented as the computer program module described with reference to FIG. 3, and may, when executed by the processor 310, implement the corresponding operations described above.

The program running on the device according to the present invention may be a program that enables the computer to implement the functions of the embodiments of the present invention by controlling a central processing unit (CPU). The program or information processed by the program may be temporarily stored in a volatile memory (for example, a Random Access Memory (RAM)), a Hard Disk Drive (HDD), a nonvolatile memory (for example, a flash memory), or other memory systems.

The program for implementing the functions of the embodiments of the present invention may be recorded on a computer-readable recording medium. The corresponding functions can be achieved by the computer system through reading programs recorded on the recording medium and executing them. The so-called "computer system" herein may be a computer system embedded in the device, which may include operating systems or hardware (for example, peripherals). The "computer-readable recording medium" may be a semiconductor recording medium, an optical recording medium, a magnetic recording medium, a recording medium for programs that are dynamically stored for a short time, or any other computer-readable recording medium.

Various features or functional modules of the device applied in the above embodiments may be implemented or executed through circuits (for example, monolithic or multi-chip integrated circuits). Circuits designed to execute the functions described in this description may include general-purpose processors, digital signal processors (DSPs), application specific integrated circuits (ASICs), field programmable gate arrays (FPGAs) or other programmable logic devices, discrete gates or transistor logic, or discrete hardware components, or any combination of the above. The general-purpose processor may be a microprocessor, or may be an existing processor, a controller, a microcontroller, or a state machine. The circuit may be a digital circuit or an analog circuit. When new integrated circuit technologies that replace existing integrated circuits emerge because of the advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulted from the appropriate combinations of the technical means disclosed in different embodiments are also included within the technical scope of the present invention. In addition, components with the same effect described in the embodiments above may be replaced with one another.

## Claims

1. A bandwidth configuration method, comprising:
determining whether an activated bandwidth part exists in response to determining that an activated bandwidth part needs to be applied; and
if no activated bandwidth part exists, then applying a default bandwidth part configuration.

2. The bandwidth configuration method according to claim 1, wherein the default bandwidth part configuration is comprised in a default physical layer/physical channel configuration.

3. The bandwidth configuration method according to claim 1, wherein the default bandwidth part configuration comprises releasing a dedicated bandwidth part configuration.

4. The bandwidth configuration method according to claim 3, wherein the applying a default bandwidth part configuration comprises:
releasing the dedicated bandwidth part configuration; and
performing signal transmission by applying a common bandwidth part configuration.

5. The bandwidth configuration method according to claim 1, wherein it is determined that an activated bandwidth part needs to be applied in any one of the following situations: triggering of an RRC connection re-establishment process; triggering of an RRC connection establishment process for switching from an inactive state to an active state; or triggering of an RRC connection establishment process.

6. The bandwidth configuration method according to claim 1, further comprising:
determining whether a current serving cell has been changed; and
when it is determined that the current serving cell has not been changed, determining whether an access resource exists on a previously activated bandwidth part.

7. The bandwidth configuration method according to claim 6, further comprising:
when an access resource exists on the previously activated bandwidth part, applying the previously activated bandwidth part as a currently activated bandwidth part.

8. The bandwidth configuration method according to claim 7, further comprising:
when no access resource exists on the previously activated bandwidth part, applying the default bandwidth part configuration.

9. An electronic device, comprising:
a bandwidth determination module configured to determine whether an activated bandwidth part exists in response to determining that an activated bandwidth part needs to be applied; and
a bandwidth configuration module configured to apply a default bandwidth part configuration when the bandwidth determination module determines that no activated bandwidth part exists.

10. An electronic device, comprising:
one or a plurality of processors, and
a memory storing a computer program, wherein when executed on the one or the plurality of processors, the computer program causes the one or the plurality of processors to execute the method according to any one of claims 1-8.
